# EUROPEAN PATENT SPECIFICATION

(11) **EP 3 390 973 B1**
(45) Date of publication and mention of the grant of the patent: **24.02.2021**
(21) Application number: 16826790.4
(22) Date of filing: 12.12.2016
(51) Int. Cl.: G01D 9/00, G01D 11/30, G01D 21/00, G01D 21/02, G08C 17/02, F25D 29/00, B65D 90/48, B60P 3/20

(54) **FLEXIBLE SENSOR DEVICE**
FLEXIBLE SENSORVORRICHTUNG
DISPOSITIF DE CAPTEUR FLEXIBLE

(30) Priority: 18.12.2015 US 201562269342 P
(43) Date of publication of application: 24.10.2018
(73) Proprietor: Carrier Corporation, Farmington, Connecticut 06032 (US)
(72) Inventor: RUSIGNUOLO, Giorgio, East Syracuse New York 13057 (US); CHEN, Yu H., Syracuse New York 13221 (US); BEASLEY, Marc, Beverly Massachusetts 01915 (US); DIMAGGIO, Luke, Athens Georgia 30601 (US); KUMAR, Kartik, 3047 BL Rotterdam (NL)
(74) Representative: Schmitt-Nilson Schraud Waibel Wohlfrom Patentanwälte Partnerschaft mbB
(86) International application number: PCT/US2016/066059
(87) International publication number: WO 2017/106060

(56) References cited:
- WO-A2-2014/200578
- US-A1- 2007 267 509
- US-A1- 2008 272 131
- US-A1- 2010 194 579

## Description

### DESCRIPTION OF RELATED ART

The subject matter disclosed herein relates to a wireless sensor system for use in refrigerated containers.

Typically, cold chain distribution systems are used to transport and distribute temperature sensitive and perishable goods. For example, products such as food and pharmaceuticals may be susceptible to temperature, humidity, contaminants, and other environmental factors. Advantageously, cold chain systems allow perishable and environmentally sensitive goods to be effectively transported and distributed without damage or other undesirable effects. US 2008/0272131 A1 discloses an insulated container having a temperature monitoring device that can be used to maintain an object stored in the container at a temperature that is below the normal operating temperature of the temperature monitoring device.

Cold chain systems may utilize sensors to monitor conditions and parameters during transport. Sensors within cold chain systems may be susceptible to damage and may be difficult to repair or replace. A system and device that can provide a flexible and modular sensor is desired. WO 2014/200578 A2 discloses a system comprising plural sensing strips that are affixed to a sidewall of a trailer's hopper at spaced locations.

US2010/0194579 A1 discloses a wireless sensor system for use in a cargo refrigerated container comprising a sensor adapted to be mounted on door elements of the container.

US2007/0267509 A1 also discloses a wireless sensor system for use in cargo refrigerated container comprising one or several sensors attached to the ceiling of the container by adhesive pads.

### BRIEF SUMMARY

According to the invention, a wireless sensor system for use in a refrigerated container is defined in claim 1. Such a wireless sensor system for use in a refrigerated container comprises at least one wireless sensor device that includes a flexible sensor body including at least one sensing element to sense at least one parameter of the refrigerated container, a battery to provide power to the at least one of sensing elements, a battery housing coupled to an end of the flexible sensor body and at least a pair of sensor mounting rails mounted to a ceiling of a refrigerated container and extending horizontally, wherein the mounting rails have a keyed profile to interface with the at least one wireless sensor device, and portions of the battery housing of the sensor device are configured to slidingly engage with the mounting rails.

Further according to the invention, a wireless sensor system for use in a refrigerated container includes at least one wireless sensor device, including, a flexible sensor body including at least one of sensing elements to sense at least one parameter of the refrigerated container, a battery to provide power to the at least one of sensing elements, and a battery housing coupled to an end of the flexible sensor body, and at least a pair of parallel sensor mounting rails adapted to be mounted to a ceiling of the refrigerated container and extending horizontally, whereby the at least one pair of parallel sensor mounting rails to receive the battery housing of at least one wireless sensor device.

Further the invention includes that the mounting rails have a keyed profile to interface with the at least one wireless sensor device, and portions of the battery housing of the sensor device are configured to slidingly engage with the mounting rails.

In addition to one or more of the features described above, further embodiments could include that the flexible sensor body is formed from plastic.

In addition to one or more of the features described above, further embodiments could include a wireless radio to transmit at least one sensing element value from the at least one sensing element.

In addition to one or more of the features described above, further embodiments could include a data logger to receive the at least one sensing element value from the wireless radio.

In addition to one or more of the features described above, further embodiments could include that the at least one sensing element is vertically arranged.

In addition to one or more of the features described above, further embodiments could include that the at least one sensing element is arranged in a grid.

In addition to one or more of the features described above, further embodiments could include that the at least one sensing element includes at least one of a light sensor, an accelerometer, a hygrometer, a thermometer, a proximity sensor, a gas sensor, a CO2 sensor, and an ethylene sensor.

Technical function of the embodiments described above includes a flexible sensor body including at least one sensing element and a battery housing coupled to an end of the flexible sensor body.

Other aspects, features, and techniques of the embodiments will become more apparent from the following description taken in conjunction with the drawings.

### BRIEF DESCRIPTION OF THE SEVERAL VIEWS OF THE DRAWINGS

The subject matter of the invention is solely defined in the claims at the conclusion of the specification. The foregoing and other features, and advantages of the embodiments are apparent from the following detailed description taken in conjunction with the accompanying drawings in which like elements are numbered alike in the several FIGURES:
FIG. 1 illustrates a schematic view of a wireless sensor system;
FIG. 2 is a schematic view of an embodiment of a wireless sensor for use with the wireless sensor system of FIG. 1;
FIG. 3 is a schematic view of an embodiment of a wireless sensor for use with the wireless sensor system of FIG. 1; and
FIG. 4 is a schematic view of an embodiment of a wireless sensor for use with the wireless sensor system of FIG. 1.

### DETAILED DESCRIPTION

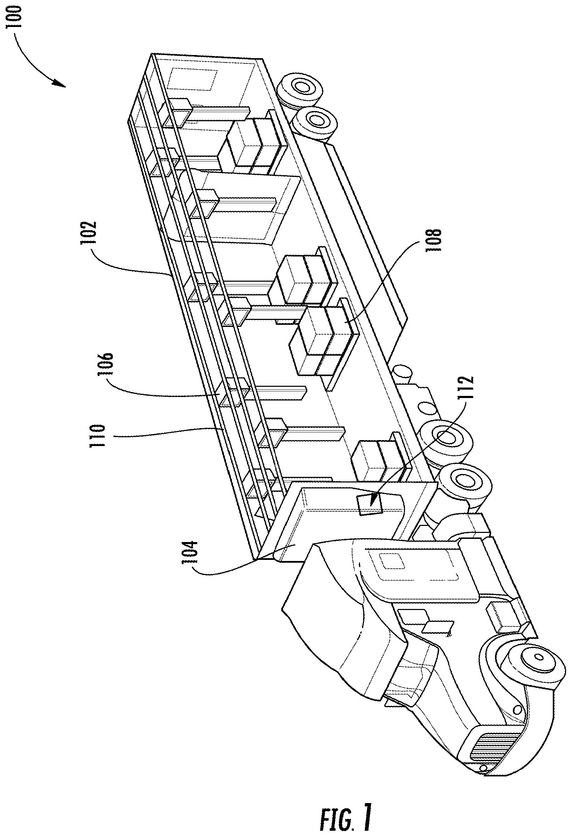

Referring now to the drawings, FIG. 1 illustrates a schematic view of a wireless sensor system 100. In the illustrated embodiment, the wireless sensor system 100 includes a refrigerated container 102, a refrigeration unit 104, sensors 106, cargo load 108, a mounting rail 110, and a data logger 112. In the illustrated embodiment, the wireless sensor system 100 can monitor parameters of the refrigeration unit 104, the refrigerated container 102, and the cargo load 108. The wireless sensor system 100 utilizes sensors 106 that have flexible sensing elements and can easily be installed and replaced on the mounting rail 110.

In the illustrated embodiment, the cargo load 108 is transported or stored within the refrigerated container 102, wherein the refrigeration unit 104 can control the temperature of the cargo load 108. In the illustrated embodiment, the cargo load 108 includes any suitable product. In certain embodiments, the cargo load 108 includes perishable products such as meat, fruit, vegetables, drugs, blood, etc. that may be transported via a cold chain system. In the illustrated embodiment, the cargo load 108 is a temperature sensitive cargo, including, but not limited to food, drugs, blood, and other temperature sensitive materials.

In the illustrated embodiment, the refrigeration unit 104 provides refrigerated, dehumidified, or otherwise climate controlled air to the volume of the refrigerated container 102. In the illustrated embodiment, climate controlled airflow is utilized to control the temperature profile of the refrigerated container 102 and consequently the cargo load 108. In the illustrated embodiment, the refrigeration unit 104 includes an evaporator disposed within volume of refrigerated container 102.

In the illustrated embodiment, the cargo load 108 is transported and stored in the refrigerated container 102. In the illustrated embodiment, the refrigerated container 102 is an insulated container to provide thermal isolation and to maintain a desired climate within the volume of the refrigerated container 102. Therefore, in the illustrated embodiment, environmental parameters such as temperature, humidity, etc. are generally controlled within the volume of the refrigerated container 102. In certain embodiments the refrigerated container 102 can be pulled by a tractor. It is understood that embodiments described herein may be applied to shipping containers that are shipped by rail, sea, or any other suitable container, without use of a tractor. In the illustrated embodiment the refrigerated container 102 can include at least one door to allow access to volume within.

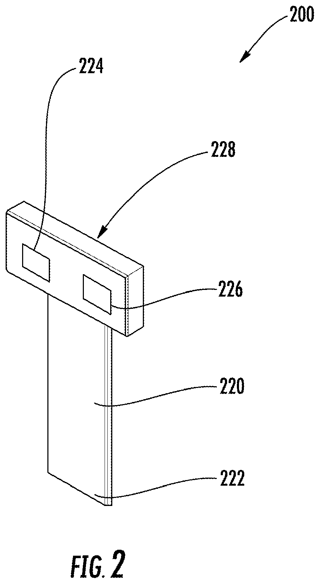

In the illustrated embodiment, the sensors 106 can be distributed throughout the volume of the refrigerated container 102. In certain embodiments, the sensors 106 are evenly distributed throughout the refrigerated container 102. The sensor 106 is further described in FIGS. 2-4.

In the illustrated embodiment, mounting rails 110 are provided within the refrigerated container 102. The mounting rails 110 can be formed from metals, plastics, composites, or any suitable material to withstand the environment within the refrigerated container 102. In the illustrated embodiment, the mounting rails 110 are a pair of parallel beams. In certain embodiments, the mounting rails 110 can be cylindrical in shape, rectangular in shape, etc. In certain embodiments the mounting rails 110 have a keyed profile to interface with the sensors 106.

In the illustrated embodiment, the sensors 106 can be engaged to the mounting rails 110 in the refrigerated container 102. In certain embodiments, the sensors 106 can snap or engage with the mounting rails 110. In certain embodiments, the sensors 106 can slide along the mounting rails 110. In the illustrated embodiment, the mounting rails 110 are mounted to the ceiling of the refrigerated container 102. According to the invention, the features of the mounting rails 110 engage with portions of the battery housing of the sensor 106, described below.

In the illustrated embodiment, a data logger 112 can communicate with the sensors 106 disposed throughout the refrigerated container 102. In the illustrated embodiment, the data logger 112 can communicate wirelessly with the sensors 106. In certain embodiments, the data logger 112 can receive sensor data or values and store and log the sensor data or values. In certain embodiments, the data can be recorded to be downloaded at a later time. In other embodiments, the data logger 112 can transmit data to a remote location to be monitored either in real time or after transport.

Referring to FIG. 2, a sensor 200 is shown. In the illustrated embodiment, the sensor 200 is suitable for use with the wireless sensor system 100. In the illustrated embodiment, the sensor 200 includes a sensor body 220, a sensor element 222, and a battery housing 228. In the illustrated embodiment, the sensor 200 can easily be removed, replaced, or moved along mounting rails 110 and can avoid damage during the insertion and removal of cargo loads 108.

In the illustrated embodiment, the sensor body 220 is a flexible strip extending from the battery housing 228. In the illustrated embodiment, the sensor body 220 can be formed from plastic or any other suitable material. In the illustrated embodiment, sensing elements 222 are embedded within the sensor body 220. In certain embodiments, the sensor body 220 can provide a conductive pathway for the sensing elements 222 to the battery housing 228. In the illustrated embodiment, the sensor body 220 can be rolled up, folded, bent, etc. due to the flexible construction of the sensor body 220. Advantageously, the sensor body 222 can avoid damage during loading and unloading of cargo loads 108 by being in a rolled or otherwise retracted position. Further, in certain embodiments, the sensor body 220 can be removably coupled to the battery housing 228, facilitating replacement of the sensor body 222 independent of the battery housing 228.

In the illustrated embodiment, the sensor body 220 can be any suitable length. In the illustrated embodiment, the sensor body 220 can extend from approximately the ceiling of the refrigerated container 102 to approximately the floor of the refrigerated container 102. Advantageously, the length of the sensor body 220 can allow for sensing elements 222 to sense parameters along the entire height of the refrigerated container 102 to allow for more comprehensive data logging. In the illustrated embodiment, the sensor body 220 can be any suitable width.

In the illustrated embodiment, the sensor body 220 can include at least one sensor element 222 to sense at least one parameter of the refrigerated container 102. In the illustrated embodiment, the sensor elements 222 are embedded within the sensor body 220. Sensor elements 222 can include, but are not limited to light sensors, accelerometers, hygrometers, thermometers, proximity sensors, gas sensors, CO2 sensors, ethylene sensors, etc. In the illustrated embodiment, the sensor body 220 can include any combination of sensing elements 222. In the illustrated embodiment, the sensor body can include multiple sensing elements 222 of the same type along various locations of the sensor body 220. Advantageously, the sensing elements 222 can detect incorrect or non-optimized loading and packing of the cargo loads 108 as well as provide real time monitoring of conditions within the refrigerated container 102. In certain embodiments, the sensing elements 222 can provide data regarding hotspots within the refrigerated container 102.

In the illustrated embodiment, the sensor 200 can include a wireless radio 224. In the illustrated embodiment, the wireless radio 224 can communicate with sensing elements 222 via a conductive pathway within the sensor body 220. In the illustrated embodiment, the wireless radio 224 can communicate with the data logger 112 to transmit data from the sensing elements 222. The wireless radio 224 may utilize Wi-Fi, Bluetooth, near field communication, etc. In the illustrated embodiment, the wireless radio 224 is disposed within the battery housing 228. In certain embodiments, the wireless radio 224 can use elements of the sensor body 220 as an antenna.

In the illustrated embodiment, the sensor 200 includes a battery 226 to provide power to the sensing elements 222. In the illustrated embodiment, the battery 226 can provide power via a conductive pathway of the sensor body 220. The battery 226 can be of any suitable type including, but not limited to lithium ion, lithium polymer, alkaline, nickelcadmium, etc. In the illustrated embodiment, the battery 226 is a rechargeable battery. In the illustrated embodiment, the battery 226 is selected to provide a suitable capacity to power the sensor 200 for the duration of the transport of the cargo load 108. In certain embodiments, the battery 226 is replaceable. The battery 226 can be located within a battery housing 228.

In the illustrated embodiment, the battery 226 is housed within the battery housing 228. In certain embodiments, other components, such as the wireless radio 224 can be housed within the battery housing 228. Advantageously, the battery housing 228 allows for sensitive components to be stored in a location protected from impacts. In the illustrated embodiment, the battery housing 228 releasably engages the sensor body 220, allowing the sensor body 220 to be removed, reattached, and replaced as needed. In the illustrated embodiment, the battery housing 228 has a generally rectangular shape. Further, in the illustrated embodiment, the battery housing 228 is configured to interface with the mounting rails 110. In the illustrated embodiment, the battery housing 228 may be snapped, or otherwise engaged to the mounting rails 110 via engaging features. In certain embodiments, the battery housing 228 can slide along the mounting rails 110.

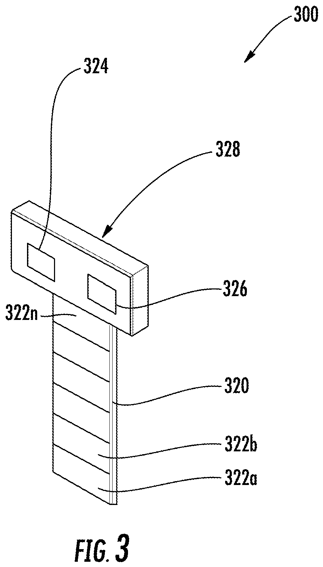

Referring to FIG. 3, an alternative embodiment of the sensor 300 is shown. In the illustrated embodiment, the last two digits of the reference numerals correspond to the last two digits of the reference numerals of FIG. 2. In the illustrated embodiment, a plurality of linearly disposed sensing elements 322a-322n are shown. In the illustrated embodiment, the sensing elements 322a-322n can be transversely or vertically disposed along the sensor body 320. Advantageously, the plurality of sensing elements 322a-322n can provide directional information regarding the environment of the refrigerated container 102.

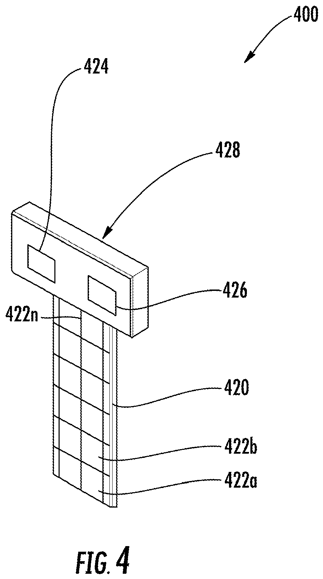

Referring to FIG. 4, an alternative embodiment of the sensor 400 is shown. In the illustrated embodiments, the last two digits of the reference numerals correspond to the last two digits of the reference numerals of FIG. 2. In the illustrated embodiment, a plurality of linearly disposed sensing elements 422a-422n are shown. In the illustrated embodiment, the sensing elements 422a-422n can be disposed in a grid along the sensor body 420. Advantageously, the plurality of sensing elements 422a-422n can provide directional information regarding the environment of the refrigerated container 102 both vertically and laterally.

The terminology used herein is for the purpose of describing particular embodiments only and is not intended to be limiting of the embodiments. While the description of the present embodiments has been presented for purposes of illustration and description, it is not intended to be exhaustive or limited to the embodiments in the form disclosed. Many modifications, variations, alterations, substitutions or equivalent arrangement not hereto described will be apparent to those of ordinary skill in the art without departing from the scope of the embodiments. Additionally, while various embodiments have been described, it is to be understood that aspects may include only some of the described embodiments. Accordingly, the embodiments are not to be seen as limited by the foregoing description, but are only limited by the scope of the appended claims.

## Claims

1. A wireless sensor system (100) for use in a refrigerated container (102), comprising at least one wireless sensor device (200; 300; 400), including:
a flexible sensor body (220; 320; 420) including at least one of sensing elements (222; 322; 422) to sense at least one parameter of the refrigerated container (102);
a battery (226; 326; 426) to provide power to the at least one of sensing elements (222; 322; 422); and
a battery housing (228; 328; 428) coupled to an end of the flexible sensor body (220; 320; 420); and
at least a pair of parallel sensor mounting rails (110) adapted to be mounted to a ceiling of a refrigerated container (102) and extending horizontally,
wherein the mounting rails (110) have a keyed profile to interface with the at least one wireless sensor device (200; 300; 400); and portions of the battery housing (228; 328; 428) of the sensor device (200; 300; 400) are configured to slidingly engage with the mounting rails (110).

2. The wireless sensor system (100) of claim 1, wherein the battery housing (228; 328; 428) of the sensor device (200; 300; 400) snap with the mounting rails (110) or slide along the mounting rails (110).

3. The wireless sensor system (100) of any of the preceding claims, wherein the flexible sensor body (220; 320; 420) is formed from plastic.

4. The wireless sensor system (100) of any of the preceding claims, the at least one wireless sensor device (200; 300; 400) further comprising a wireless radio (224; 324; 424) to transmit at least one sensing element value from the at least one sensing element (222; 322; 422).

5. The wireless sensor system (100) of any of the preceding claims, further comprising a data logger (112) to receive the at least one sensing element value from the wireless radio (224; 324; 424).

6. The wireless sensor system (100) of any of the preceding claims, wherein the at least one sensing element (222; 322; 422) is vertically arranged.

7. The wireless sensor system (100) of any of the preceding claims, wherein the at least one sensing element (222; 322; 422) is arranged in a grid.

8. The wireless sensor system (100) of any of the preceding claims, wherein the at least one sensing element (222; 322; 422) includes at least one of a light sensor, an accelerometer, a hygrometer, a thermometer, a proximity sensor, a gas sensor, a CO2 sensor, and an ethylene sensor.

## Patentansprüche

1. Drahtloses Sensorsystem (100) zur Verwendung in einem gekühlten Behälter (102), das mindestens eine drahtlose Sensorvorrichtung (200; 300; 400) umfasst, das Folgendes beinhaltet:
einen flexiblen Sensorkörper (220; 320; 420), der mindestens eines von Sensorelementen (222; 322; 422) beinhaltet, um mindestens einen Parameter des gekühlten Behälters (102) zu erfassen;
eine Batterie (226; 326; 426), um Energie zu dem mindestens einen von Sensorelementen (222; 322; 422) bereitzustellen; und
ein Batteriegehäuse (228; 328; 428), das an ein Ende des flexiblen Sensorkörpers (220; 320; 420) gekoppelt ist; und
mindestens ein Paar paralleler Sensorbefestigungsschienen (110), die geeignet sind, um an einer Decke eines gekühlten Behälters (102) befestigt zu sein, und die sich horizontal erstrecken,
wobei die Befestigungsschienen (110) ein Passprofil aufweisen, um an die mindestens eine drahtlose Sensorvorrichtung (200; 300; 400) anzukoppeln; und wobei Abschnitte des Batteriegehäuses (228; 328; 428) der Sensorvorrichtung (200; 300; 400) dazu konfiguriert sind, die Befestigungsschienen (110) gleitend in Eingriff zu nehmen.

2. Drahtloses Sensorsystem (100) nach Anspruch 1, wobei das Batteriegehäuse (228; 328; 428) der Sensorvorrichtung (200; 300; 400) mit den Befestigungsschienen (110) einrastet oder entlang der Befestigungsschienen (110) gleitet.

3. Drahtloses Sensorsystem (100) nach einem der vorhergehenden Ansprüche, wobei der flexible Sensorkörper (220; 320; 420) aus Kunststoff ausgebildet ist.

4. Drahtloses Sensorsystem (100) nach einem der vorhergehenden Ansprüche, wobei die mindestens eine drahtlose Sensorvorrichtung (200; 300; 400) ferner einen drahtlosen Funk (224; 324; 424) umfasst, um mindestens einen Sensorelementwert von dem mindestens einen Sensorelement (222; 322; 422) zu übertragen.

5. Drahtloses Sensorsystem (100) nach einem der vorhergehenden Ansprüche, ferner umfassend einen Datenlogger (112), um den mindestens einen Sensorelementwert von dem drahtlosen Funk (224; 324; 424) zu empfangen.

6. Drahtloses Sensorsystem (100) nach einem der vorhergehenden Ansprüche, wobei das mindestens eine Sensorelement (222; 322; 422) vertikal angeordnet ist.

7. Drahtloses Sensorsystem (100) nach einem der vorhergehenden Ansprüche, wobei das mindestens eine Sensorelement (222; 322; 422) in einem Raster angeordnet ist.

8. Drahtloses Sensorsystem (100) nach einem der vorhergehenden Ansprüche, wobei das mindestens eine Sensorelement (222; 322; 422) mindestens einen von einem Lichtsensor, einem Beschleunigungsmesser, einem Feuchtigkeitsmesser, einem Thermometer, einem Näherungssensor, einem Gassensor, einem CO2-Sensor und einem Ethylen-Sensor beinhaltet.

## Revendications

1. Système de capteur sans fil (100) destiné à être utilisé dans un conteneur réfrigéré (102), comprenant au moins un dispositif de capteur sans fil (200 ; 300 ; 400), comportant :
un corps de capteur flexible (220 ; 320 ; 420) comportant au moins un des éléments de détection (222 ; 322 ; 422) pour capter au moins un paramètre du conteneur réfrigéré (102) ;
une batterie (226 ; 326 ; 426) pour fournir de l'énergie à l'au moins un des éléments de détection (222 ; 322 ; 422) ; et
un boîtier de batterie (228 ; 328 ; 428) couplé à une extrémité du corps de capteur flexible (220 ; 320 ; 420) ; et
au moins une paire de rails de montage de capteur parallèles (110) conçus pour être montés au plafond d'un conteneur réfrigéré (102) et s'étendant horizontalement,
dans lequel les rails de montage (110) ont un profil à clé pour s'interfacer avec l'au moins un dispositif de capteur sans fil (200 ; 300 ; 400) ; et des parties du boîtier de batterie (228 ; 328 ; 428) du dispositif de capteur (200 ; 300 ; 400) sont configurées pour venir en prise de manière coulissante avec les rails de montage (110).

2. Système de capteur sans fil (100) selon la revendication 1, dans lequel le boîtier de batterie (228 ; 328 ; 428) du dispositif de capteur (200 ; 300 ; 400) s'enclenche avec les rails de montage (110) ou coulisse le long des rails de montage (110).

3. Système de capteur sans fil (100) selon l'une quelconque des revendications précédentes, dans lequel le corps de capteur flexible (220 ; 320 ; 420) est constitué de plastique.

4. Système de capteur sans fil (100) selon l'une quelconque des revendications précédentes, l'au moins un dispositif de capteur sans fil (200 ; 300 ; 400) comprenant en outre une radio sans fil (224 ; 324 ; 424) pour transmettre au moins une valeur d'élément de détection à partir de l'au moins un élément de détection (222 ; 322 ; 422).

5. Système de capteur sans fil (100) selon l'une quelconque des revendications précédentes, comprenant en outre un enregistreur de données (112) pour recevoir l'au moins une valeur d'élément de détection à partir de la radio sans fil (224 ; 324 ; 424).

6. Système de capteur sans fil (100) selon l'une quelconque des revendications précédentes, dans lequel l'au moins un élément de détection (222 ; 322 ; 422) est agencé verticalement.

7. Système de capteur sans fil (100) selon l'une quelconque des revendications précédentes, dans lequel l'au moins un élément de détection (222 ; 322 ; 422) est agencé dans une grille.

8. Système de capteur sans fil (100) selon l'une quelconque des revendications précédentes, dans lequel l'au moins un élément de détection (222 ; 322 ; 422) comporte au moins l'un parmi un capteur de lumière, un accéléromètre, un hygromètre, un thermomètre, un capteur de proximité, un capteur de gaz, un capteur de CO2 et un capteur d'éthylène.
